## Europäisches Patentamt

## European Patent Office

## Office européen des brevets

(11) Veröffentlichungsnummer: **0 100 767**
**B1**

(12) **EUROPÄISCHE PATENTSCHRIFT**

(45) Veröffentlichungstag der Patentschrift:
**26.08.87**

(51) Int. Cl.⁴: **B 23 B 51/00**

(21) Anmeldenummer: **83890091.8**

(22) Anmeldetag: **31.05.83**

(54) **Kreiszylindrischer Körper zum Einsetzen in eine Passbohrung, insbesondere für eine Werkzeughalterung.**

(30) Priorität: **30.07.82 AT 2942/82**

(43) Veröffentlichungstag der Anmeldung:
**15.02.84 Patentblatt 84/7**

(45) Bekanntmachung des Hinweises auf die Patenterteilung:
**26.08.87 Patentblatt 87/35**

(84) Benannte Vertragsstaaten:
**BE CH DE FR GB IT LI LU NL SE**

(56) Entgegenhaltungen:
**DE - C - 459 444**
**GB - A - 22 498**
**US - A - 2 940 765**

(73) Patentinhaber: **VOEST-ALPINE Aktiengesellschaft, Muldenstrasse 5, A-4020 Linz (AT)**

(72) Erfinder: **Ehrentraut, Gottfried, Dipl.-Ing., Oidenerstrasse 34a, A-4033 Linz (AT)**

(74) Vertreter: **Hübscher, Gerhard, Dipl.-Ing. et al, Patentanwälte Dipl.-Ing. Gerhard Hübscher Dipl.-Ing. Helmut Hübscher Dipl.-Ing. Heiner Hübscher Spittelwiese 7, A-4020 Linz (AT)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf einen kreiszylindrischen Körper zum Einsetzen in eine Passbohrung, insbesondere für eine Werkzeughalterung, mit einem durch eine Einschnürung abgesetzten Einführende in Form eines Rotationskörpers mit der Zylinderachse als Rotationsachse.

Um Werkstücke mit engen Toleranzen fertigen zu können, ist es notwendig, die Werkzeuge genau in den hiefür vorgesehenen Aufnahmen zu lagern. Werden zu diesem Zweck konische Aufnahmen vorgesehen, so lässt sich eine hohe Genauigkeit hinsichtlich der zentrischen Lagerung der Werkzeuge erreichen. Die axiale Positionierung des Werkzeuges bleibt jedoch vergleichsweise ungenau. Wird eine zylindrische Werkzeugaufnahme vorgesehen, so ist wiederum eine durch einen Anschlag bestimmte, genaue axiale Stellung des Werkzeuges mit einfachen Mitteln zu gewährleisten, während die Zentrierung Schwierigkeiten bereitet, weil der zylindrische Werkzeugschaft oder der zylindrische Schaft des Werkzeughalters in eine entsprechende Passbohrung eingesetzt werden muss. Kann der zylindrische Schaft nicht nach einer genauen koaxialen Ausrichtung in die Passbohrung eingesetzt werden, so besteht die Gefahr, dass sich der zylindrische Schaft beim Einführen in die Aufnahmebohrung verklemmt. Die das Einführen erleichternde konische Anfasung des Einführendes kann ein Verkanten mit der sich daraus ergebenden Selbsthemmung nicht verhindern.

Diese Einführschwierigkeiten treten aber nicht nur bei kreiszylindrischen Körpern auf, bei denen ein absatzloser Übergang zum Einführende gegeben ist, sondern auch bei Körpern, deren Einführende duch eine Einschnürung abgesetzt ist, weil eben auch die Einführenden eine kreiszylindrische Gestalt aufweisen. Solche Einschnürungen sind nämlich nicht für die Erleichterung des Einführens des kreiszylindrischen Körpers in eine Passbohrung gedacht, sondern beispielsweise zum axialen Festhalten der Körper in der Passbohrung durch in die Einschnürung eingreifende Raststücke (DE-OS 2 647 633).

Da bei Werkzeugwechseleinrichtungen ein wiederholter Werkzeugwechsel gewährleistet werden muss, kommt dem Problem des Einsetzens eines kreiszylindrischen Körpers in eine Passbohrung eine besondere Bedeutung zu, wobei erschwerend hinzukommt, dass die üblichen für den Werkstückwechsel vorgesehenen Handhabungsgeräte für den Werkzeugwechsel wegen der vergleichsweise ungenaueren Werkstückführung nicht eingesetzt werden können.

Der Erfindung liegt somit die Aufgabe zugrunde, das Einführende eines kreiszylindrischen Körpers so zu gestalten, dass der kreiszylindrische Körper auch dann in eine genaue Passbohrung ohne Gefahr einer durch eine Verkantung auftretenden Selbsthemmung eingeführt werden kann, wenn vor dem Einführen keine genaue Ausrichtung der Zylinderachse gegenüber der Bohrungsachse erfolgt.

Die Erfindung löst die gestellte Aufgabe dadurch, dass der Rotationskörper eine Kugelzone bildet, die sich beidseits ihrer auf die Zylinderachse senkrechten Grosskreisebene erstreckt.

Durch die Ausgestaltung des Einführendes in Form einer Kugelzone, die sich beidseits einer zur Zylinderachse senkrechten Grosskreisebene erstreckt, wird ein Kugelgelenk erreicht, das auch bei einer Neigung der Zylinderachse gegenüber der Bohrungsachse ein verkantungsfreies Einführen des kreiszylindrischen Körpers in die Passbohrung erlaubt. Die Höhe der Kugelzone muss dabei selbstverständlich an den maximal zulässigen Winkelfehler bezüglich der Zylinderachse und der Bohrungsachse angepasst sein. Ist das Einführende des zylindrischen Körpers bereits in die Passbohrung eingeführt, so ergibt sich beim weiteren Einschieben des zylindrischen Körpers in die Passbohrung eine Selbstausrichtung, weil der zylindrische Teil mit einem entsprechenden Abstand von der Kugelzone an der Bohrungswand geführt wird. Versuche haben ergeben, dass mit Hilfe dieser Massnahme kreiszylindrische Körper auch bei vergleichsweise grossen Winkelfehlern bei der Ausrichtung der Zylinderachse gegenüber der Bohrungsachse problemlos in die Passbohrung eingesetzt werden können, wenn die Lagerung des einzusetzenden Zylinderkörpers die Selbstausrichtung innerhalb der Passbohrung zulässt.

Der Übergang von der Kugelzone zum kreiszylindrischen Abschnitt muss dabei sicherstellen, dass der kreiszylindrische Körper im Bereich dieses Überganges nicht am Bohrungsrand hängenbleiben kann. Ein stufenförmiger Absatz ist folglich zu vemeiden. Besonders günstige Verhältnisse ergeben sich sowohl hinsichtlich der Herstellung als auch hinsichtlich der Funktion, wenn der Übergang von der Kugelzone zum kreiszylindrischen Abschnitt aus einem kegelförmigen Abschnitt besteht. Es liegt auf der Hand, dass der Kegelwinkel dieses kegelförmigen Abschnittes nicht zu gross gewählt werden kann. In der Praxis hat sich ein Kegelwinkel für den kegelförmigen Abschnitt von 10 bis 40°, vorzugsweise 20°, als allen Anforderungen entsprechend herausgestellt.

Damit bei Einführenden mit einer vergleichsweise niedrigen Kugelzone das Einführen der Kugelzone in die Passbohrung erleichtert wird, kann die Kugelzone in einem kegelstumpfförmigen Abschnitt auslaufen, dessen Kegelwinkel vorzugsweise 90° beträgt. Die dadurch bewirkte zusätzliche Verjüngung des kreiszylindrischen Körpers im Bereich des Einführendes erlaubt eine Erfassung grösserer seitlicher Versetzungen von Zylinderachse und Bohrungsachse.

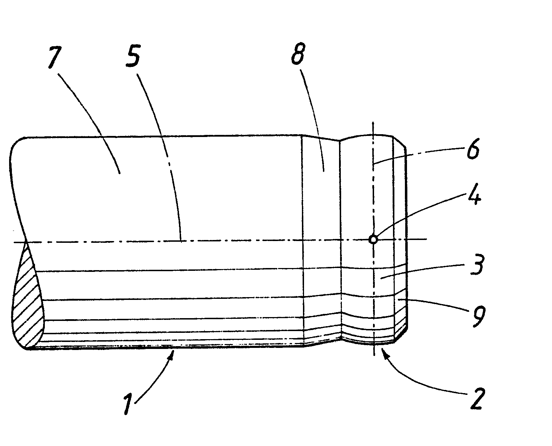

In der Zeichnung ist der Erfindungsgegenstand beispielsweise dargestellt, und zwar ist ein erfindungsgemässer kreiszylindrischer Körper zum Einsetzen in eine Passbohrung in Ansicht gezeigt.

Um einen kreiszylindrischen Körper 1, beispielsweise den zylindrischen Schaft eines Werkzeuges oder eines Werkzeughalters, in eine Passbohrung (Werkzeug- oder Halteraufnahme) ohne vorhergehende genaue Ausrichtung des kreiszylindrischen Körpers 1 gegenüber der Passbohrung einsetzen zu können, weist der kreiszylindrische Körper 1 an seinem Einführende 2 eine Kugelzone 3 auf, wobei der Kugelmittelpunkt 4 auf der Zylinderachse 5 liegt. Da sich die Kugelzone 3 beidseits ihrer durch den Kugelmittelpunkt 4 gehenden und auf die Zylinderachse 5 senkrecht stehenden Grosskreisebene 6 erstreckt, wird beim Einsetzen des Einführendes 2 in eine Passbohrung über die Kugelzone 3 ein Kugelgelenk erreicht, das ein klemmfreies Verschwenken des zylindrischen Körpers 1 um den Kugelmittelpunkt 4 erlaubt, so dass die anschliessende Oberfläche des kreiszylindrischen Körpers 1 bei ihrem Anlegen an die Bohrungswand eine Führungsfläche bildet, mit deren Hilfe der Körper 1 unter einem Verschwenken um den Kugelmittelpunkt 4 ausgerichtet wird. Damit diese selbstzentrierende Führung des Körpers 1 tatsächlich ohne Selbsthemmung auftritt, muss für einen entsprechenden Übergang von der Kugelzone 3 zum kreiszylindrischen Abschnitt 7 gesorgt werden. Ist dieser Übergang als kegelförmiger Abschnitt 8 ausgebildet, so können alle Anforderungen erfüllt werden, wenn der Kegelwinkel dieses Abschnittes 8 kleiner als 40° ist, wobei ein Kegelwinkel von 20° als Optimum anzusehen ist.

Da die Höhe der Kugelzone 3 sich nach dem maximal zulässigen Winkelfehler zwischen der Zylinderachse 5 und der Bohrungsachse vor dem Einführen in die Passbohrung richten muss, kann es vorkommen, dass die sich durch die Kugelzone 3 ergebende Verjüngung nicht ausreicht, um bei den vorkommenden seitlichen Versetzungen zwischen dem kreiszylindrischen Körper 1 und der Passbohrung das Einführen des Einführendes 2 in die Passbohrung sicherzustellen. Zur Abhilfe kann die Kugelzone 3 in einem kegelstumpfförmigen Abschnitt 9 auslaufen, dessen Kegelwinkel vorzugsweise 90° beträgt.

Es braucht wohl nicht näher ausgeführt zu werden, dass die Erfindung nicht auf die Anwendung für Werkzeughalterungen beschränkt ist. Sie kann vielmehr überall dort zur Anwendung kommen, wo ein kreiszylindrischer Körper in eine Passbohrung eingeführt werden muss, wie dies beispielsweise bei Führungsbolzen, bei Kolben, bei Lagern u.dgl. der Fall ist. Wesentlich ist bei allen Anwendungsfällen, dass das Einführungsende des kreiszylindrischen Körpers eine Kugelzone aufweist, deren Durchmesser an den Durchmesser der Passbohrung angepasst ist, so dass sich auf Grund dieser Kugelzone eine allseits verschwenkbare Führung des kreiszylindrischen Körpers in der Passbohrung im Bereich des Einführendes ergibt.

## Patentansprüche

1. Kreiszylindrischer Körper (1) zum Einsetzen in eine Passbohrung, insbesondere für eine Werkzeughalterung, mit einem durch eine Einschnürung abgesetzten Einführende (2) in Form eines Rotationskörpers mit der Zylinderachse (5) als Rotationsachse, dadurch gekennzeichnet, dass der Rotationskörper eine Kugelzone (3) bildet, die sich beidseits ihrer auf die Zylinderachse (5) senkrechten Grosskreisebene (6) erstreckt.

2. Kreiszylindrischer Körper nach Anspruch 1, dadurch gekennzeichnet, dass der Übergang von der Kugelzone (3) zum kreiszylindrischen Abschnitt (7) aus einem kegelförmigen Abschnitt (8) besteht.

3. Kreiszylindrischer Körper nach Anspruch 2, dadurch gekennzeichnet, dass der Kegelwinkel des kegelförmigen Abschnittes (8) 10 bis 40°, vorzugsweise 20°, beträgt.

4. Kreiszylindrischer Körper nach einem der Ansprüche 1 bis 3, dadurch gekennzeichnet, dass die Kugelzone (3) in einem kegelstumpfförmigen Abschnitt (9) ausläuft, dessen Kegelwinkel vorzugsweise 90° beträgt.

## Claims

1. A circulary cylindrical body (1) adapted to be inserted into a fitting bore, particularly for holding a tool, comprising an inserting end portion, which is offset by a constriction and consists of a solid of revolution which is centered on the axis (5) of the cylinder, characterized in that the solid of revolution constitutes a spherical zone (3), which extends on both sides of its great circle plane (6) that is at right angles to the axis (5) of the cylinder.

2. A circularly cylindrical body according to claim 1, characterized in that the transition from the spherical zone (3) to the circularly cylindrical portion (7) consist of a conical portion (8).

3. A circularly cylindrical body according to claim 2, characterized in that the conical portion (8) has an included angle of 10 to 40 degrees, preferably 20 degrees.

4. A circularly cylindrical body according to any of claims 1 to 3, characterized in that the spherical zone (3) merges into a frustoconical portion (9) having an included angle preferably amounting to 90 degreees.

## Revendications

1. Corps cylindrique (1) de révolution pour l'insertion dans une perforation d'ajustage, en particulier pour une monture d'outil, muni d'une extrémité d'introduction (2) dégradée par un rétrécissement, sous la forme d'un corps de révolution avec l'axe (5) du cylindre comme axe de rotation, caractérisé par le fait que le corps de révolution forme une zone sphérique (3) qui s'étend de part et d'autre de son plan de grand cercle (6) perpendiculaire à l'axe (6) du cylindre.

2. Corps cylindrique de révolution selon la revendication 1, caractérisé par le fait que la transition de la zone sphérique (3) au tronçon cylindrique circulaire (7) est formée d'un tronçon conique (8).

3. Corps cylindrique de révolution selon la revendication 2, caractérisé par le fait que l'angle de conicité du tronçon conique (8) est de 10 à 40°, de préférence de 20°.

4. Corps cylindrique de révolution selon l'une des revendications 1 à 3, caractérisé par le fait que la zone sphérique (3) se termine par un tronçon tronconique (9) dont l'angle de conicité est de préférence de 90°.